# EUROPÄISCHE PATENTSCHRIFT

(11) **EP 1 334 332 B1**
(45) Veröffentlichungstag und Bekanntmachung des Hinweises auf die Patenterteilung: **16.03.2005**
(21) Anmeldenummer: 01992872.0
(22) Anmeldetag: 13.10.2001
(51) Int. Cl.: G01D 5/347

(54) **VERFAHREN ZUR POSITIONSMESSUNG UND POSITIONSMESSEINRICHTUNG ZUR AUSFÜHRUNG DES VERFAHRENS**
METHOD FOR MEASURING POSITION AND POSITION MEASURING DEVICE FOR CARRYING OUT SAID METHOD
PROCEDE DE MESURE DE POSITION ET DISPOSITIF DE MESURE DE POSITION DESTINE A LA MISE EN OEUVRE DE CE PROCEDE

(30) Priorität: 31.10.2000 DE 10054062
(43) Veröffentlichungstag der Anmeldung: 13.08.2003
(73) Patentinhaber: Dr. Johannes Heidenhain GmbH, 83292 Traunreut (DE)
(72) Erfinder: DRESCHER, Jörg, 83083 Riedering (DE); HAUSSCHMID, Mathias, 83349 Palling (DE); HUBER-LENK, Herbert, 83365 Nussdorf/Sondermoning (DE); REITER, Herbert, 84518 Garching/Alz (DE); STREITWIESER, Johann, 83355 Grabenstätt (DE); HOLZAPFEL, Wolfgang, 83119 Obing (DE)
(86) Internationale Anmeldenummer: PCT/EP2001/011857
(87) Internationale Veröffentlichungsnummer: WO 2002/037060

(56) Entgegenhaltungen:
- EP-A- 0 209 514
- EP-A- 0 399 057
- US-A- 4 906 837
- US-A- 4 907 848
- US-A- 4 931 771
- US-A- 5 073 711

## Beschreibung

Inkrementale oder absolute Positionsmesseinrichtungen werden zur definierten Positionserfassung von bewegten Objekten in Maschinen, wie beispielsweise Werkzeugmaschinen oder Wafersteppern verwendet. Dabei muss die Positionsmesseinrichtung die Objekt-Position zu ganz bestimmten Zeitpunkten messen und der Regelelektronik, die den Bewegungsablauf steuert, mitteilen. Die Zeitpunkte definiert meist die Regelefektronik mit Hilfe von Triggerimputsen. Diese Triggerimpulse werden der Positionsmesseinrichtung oder deren Auswerteelektronik zugeführt, die dann einen internen Zählerstand einspeichert und die AD-Wandler zur Signal-Interpolation triggert, indem Momentanwerte der gegeneinander phasenverschobenen Abtastsignale gleicher Periode abgespeichert bzw. übernommen und diese analog-digital gewandelt werden. Die interne Signalverarbeitung in der Auswerteelektronik gibt letztlich einen Positionsmesswert aus, der nicht exakt zum Triggerzeitpunkt vorgelegen hat, sondern zu einem um die Einspeicherzeit verschobenen Zeitpunkt. Typische Einspeicherzeiten liegen bei wenigen µs.

Die immer höher werdenden Verfahrgeschwindigkeiten und die gleichzeitig gestiegenen Genauigkeitsanforderungen insbesondere bei hohen Geschwindigkeiten erfordern eine immer kleinere Einspeicherzeit und vor allem eine extrem kleine Schwankung, der Einspeicherzeit (Einspeicherjitter). Letzteres soll anhand des Beispiels eines Wafersteppers verdeutlicht werden, das dem Artikel von P. Kwan, U. Mickan, M. Hercher: Nanometergenaue Positionsmessung in allen Freiheitstsgraden, F&M 108 (2000) 9, Seiten 60-64 entnommen ist: Bei einer Verfahrgeschwindigkeit von 2 m/s und einem Einspeicherjitter von nur 1 ns beträgt die dadurch hervorgerufene Positionsunsicherheit bereits 2 nm, was für derartige Anwendungen einen erheblichen Genauigkeitsverlust darstellt. Andererseits stellt ein Einspeicherjitter von kleiner 1 ns extrem hohe Anforderungen an die Auswerteelektronik und an die Positionsmesseinrichtung. Folgende Effekte sind bei Positionsmesseinrichtungen zu beachten:
- Alle analogen Verstärker, die zur Signalaufbereitung vor den AD-Wandlern nötig sind, besitzen begrenzte Bandbreiten und verzögern daher in erheblichem Maße die Abtastsignale. Kleine Driften der verwendeten Bauteile aufgrund von Temperatureinflüssen oder Alterungen beeinflussen die Signallaufzeiten und tragen damit zum Einspeicherjitter stark bei. Zudem sind die Signallaufzeiten von der Eingangsfrequenz und damit von der Verfahrgeschwindigkeit abhängig, was zusätzliche Beiträge zum Einspeicherjitter liefern kann.
- Auch die AD-Wandler liefern Beiträge zum Einspeicherjitter, da sie die angelegten Spannungen nicht exakt zu den Schaltflanken der Triggerimpulse messen.
- In der Regel sind die Abtastsignale um 90° gegeneinander phasenverschoben. Das Sinus- als auch das Kosinussignal müssen die gleiche Einspeicherzeit aufweisen, sonst erhält man eine von der genauen Position abgängige effektive Einspeicherzeit der Positionsmesseinrichtung, die zwischen der Einspeicherzeit des Sinus- und der des Kosinussignals schwankt. Bezüglich der Positionsbestimmung innerhalb einer Signalperiode ist jeweils das Abtastsignal maßgebend, welches in der Nähe seines Nulldurchgangs liegt, da es in diesem Bereich die größte Änderung der Position bzw. Phasenlage aufweist.

In der DE 44 10 955 A1 ist eine Positionsmesseinrichtung beschrieben, bei der die Lichtquelle dann mit hohem Strom versorgt wird, wenn ein externes Triggersignal als Anforderungssignal anliegt. Die angegebene Synchronisierung der Lichtquelle mit externen Triggerimpulsen ist nur für geringe Anforderungen an den Einspeicherjitter geeignet, denn die Zuführung der Triggerimpulse (Anforderungssignale) zu der in der Positionsmesseinrichtung befindlichen Lichtquelle findet hier über eine Drahtverbindung von einer extemen Folgeelektronik (Steuerelektronik) aus statt. Diese gewährleistet bei üblichen Kabellängen von 0,5 bis 20m keine ausreichende Laufzeitstabilität im 10ns-Bereich und darunter und kann deshalb nicht für anspruchsvolle Applikationen eingesetzt werden. Zu beachten ist hierbei, dass jitterarme Triggerimpulse meist nur unmittelbar an den sie erzeugenden Elektronikbausteinen der Steuerelektroniken verfügbar sind.

In der US 5 073 711 A und der US 4 906 837 A sind Posiüonsmessetnnchtungen angegeben, bei denen ein Maßstab über eine Lichfleitfaser beleuchtet wird und die Lichtquelle, dessen Licht in die Lichtleitfaser eingekoppelt ist, moduliert betrieben wird.

Aufgabe der Erfindung ist es, ein Verfahren zur Positionsmessung und eine Positionsmesseinrichtung zur Ausführung des Verfahrens anzugeben, welches bzw. welche eine präzise Positionsmessung gewährleistet

Diese Aufgabe wird durch ein Verfahren mit den Merkmalen des Anspruches 1 bzw. mit der Positionsmesseinnchtung mit den Merkmalen des Anspruches 6 gelöst.

Vorteilhafte Ausgestattungen der Erfindung sind in den abhängigen Ansprüchen angegeben.

Durch die Maßnahmen gemäß der Erfindung sind extrem kleine Einspeicherjitter erreichbar.

Die Erfindung wird anhand von Ausführungsbeispielen näher erläutert.

Es zeigt
- Figur 1: eine erste Positiansmesseinrichtung gemäß der Erfindung und
- Figur 2: eine zweite Positionsmesseinrichtung gemäß der Erfindung.

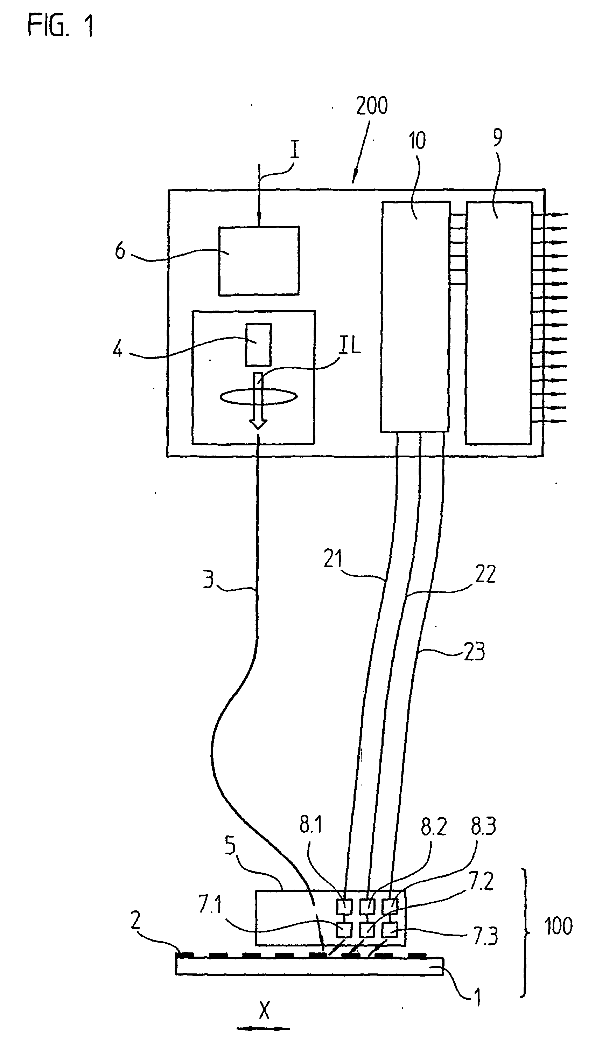

Die Positionsmesseinrichtung 100 gemäß Figur 1 besteht aus einem relativ zu einer Abtasteinrichtung 5 in Messrichtung X bewegbaren Maßstab 1 mit einer lichtelektrisch abtastbaren Teilung 2. Die Teilung 2 kann im Durchlicht oder im Auflicht abtastbar ausgebildet sein. Der Maßstab 1 kann weiterhin zur inkrementalen oder absoluten Längen- oder zur Winkelmessung ausge - bildet sein. Das zur Beleuchtung des Maßstabes 1 erforderliche Licht wird über eine Lichtleitfaser 3 zur Positionsmesseinrichtung 100 geführt. Die Lichtquelle 4 der erfindungsgemäßen optischen Positionsmesseinrichtung 100 wird nicht direkt in der Abtasteinrichtung 5 eingebaut sondern sie befindet sich an dem Ort, wo ein jitterarmer Triggerimpuls ! -auch Anforderungssignal genannt- verfügbar ist, also vorzugsweise in die Nähe oder integriert in eine den Triggerimpuls I erzeugende Steuerelektronik 200. Der Triggerimpuls I wird nun über eine digitale und damit schnelle Treiberstufe 6 auf die Lichtquelle 4 übertragen, die daher zeitsynchron einen Lichtimpuls IL mit einer Pulsdauer von 25 psec bis 5 nsec aussendet. Dieser Lichtimpuls IL wird in der Steuerelektronik 200 in die Lichtleitfaser 3 eingekoppelt und zur Abtasteinrichtung 5 übertragen. Die Laufzeit des Lichtimpulses IL in der Lichtleitfaser 3 ist dabei sehr konstant, insbesondere wenn singlemode-Fasern verwendet werden. Aber auch bei multimode-Gradientenindex-Fasem erhält man sehr gute Ergebnisse. Die Lichtimpulse IL werden in der Abtasteinrichtung 5 durch eine geeignete Abtastoptik auf den Maßstab 1 und schließlich auf Photodioden 7.1, 7.2. 7.3 gelenkt. Dabei ist es unerheblich, welche Abtastoptik verwendet wird. Es stehen insbesondere abbildende und interferentielle Abtastverfahren zur Verfügung. Durch die kurzen Lichtimpulse IL werden nun Photoladungen in den Photodioden 7.1, 7.2, 7.3 erzeugt, die auf nachfolgende Ladungsverstärker 8.1, 8.2, 8.3 übertragen werden. Die Ladungsverstärker 8.1, 8.2, 8.3 können entweder in der nachfolgenden Auswerteelektronik 9 oder direkt in der Abtasteinrichtung 5 integriert sein. Vorteilhaft ist es, wenn sie in der Abtasteinrichtung 5 integriert sind, so dass ladungsverstärkte Abtastsignale über Leitungen 21, 22, 23 geführt werden. Sie liefern an ihren Ausgängen Signalspannungen, die durch analog-digital-Wandler 10 (ADC's) in digitale Signale umgewandelt werden. Die nachfolgende, digitale Verarbeitung findet wie bei bisherigen Positionsmesseinrichtungen statt, indem aus den mehreren um 120° oder um 90° gegeneinander phasenverschobenen Abtastsignalen gleicher Periode Interpolationswerte innerhalb einer Periode ermittelt werden. Diese Verarbeitungsverfahren sind bekannt und werden hier nicht weiter ausgeführt. Unmittelbar nach der Messung werden die Ladekondensatoren der Ladungsverstärker 8.1, 8.2. 8.3 zurückgesetzt (entladen), so dass die nächste Messung durchgeführt werden kann, indem ein weiterer Lichtimpuls IL zum Maßstab 1 ausgesendet wird. Der kurze Lichtimpuls IL definiert in äußerst genauer Weise den Zeitpunkt der Positionsbestimmung. Die nachfolgenden Elektronikkomponenten - wie Photodioden 7.1, 7.2, 7.3, Verstärker, ADC's 10, Verbindungskabel etc. - beeinflussen das Ergebnis nicht und können daher relativ langsam und damit kostengünstig aufgebaut sein.

Als Lichtquellen 4 kommen je nach Abtastverfahren Laserdioden, VCSELs, LEDs, Festkörperlaser, Superlumineszenzdioden in Betracht. Dabei stellt sich insbesondere bei Halbleiterlasern ein weiterer Vorteil der Erfindung heraus: Durch das Pulsen des Lasers wird dieser longitudinal multimodig und kann damit keine störenden Modensprünge mehr aufweisen. Solche Modensprünge verursachen bei interferentiellen Positionsmesseinrichtungen 100 schon bei leicht unterschiedlichen optischen Weglängen der interferierenden Lichtbündel plötzliche und sehr störende Sprünge in der angezeigten Position.

Für inkrementale Abtastverfahren müssen noch die Zahl der überfahrenen Signalperioden erfasst werden. Im Gegensatz zu Positionsmesseinrichtungen, bei denen der Maßstab 1 kontinuierlich beleuchtet wird ist hier die Realisierung von Zählern nicht mehr direkt möglich, da zwischen zwei Triggerimpulsen I keine Abtastsignale verfügbar sind. Es wird deshalb vorgeschlagen, die Positionsmesseinrichtung 100 angepasst an die Signalperiode und die maximale Geschwindigkeit bzw. Beschleunigung sehr häufig zu triggem, beispielsweise mit 1 MHz. Durch diese hohe Triggerrate können aus den interpolierten Feinpositionen Geschwindigkeiten berechnet werden, die sich von einem Triggerzeitpunkt zum nächsten kaum ändern können. Bei langsamer Geschwindigkeit erhält man in einer Signalperiode so viele Messwerte, dass eindeutig ein Sprung zur nächsten Signalperiode festgestellt werden kann und damit ein Software-Periodenzähler hochgezählt werden kann. Steigert man die Geschwindigkeit so können aufeinanderfolgende Messwerte auch weiter bis zu einigen Signalperioden voneinander getrennt sein und trotzdem ist ein sicheres Zählen der Signalperioden mit Hilfe des Software-Periodenzählers möglich. Hierzu wird aus vorangehenden Feinpositionen die Geschwindigkeit annähernd berechnet und daraus die auftretenden Signalperioden zwischen zwei Triggerzeitpunkten ermittelt. Vorteilhaft ist eine hohe Triggerrate. Ist die Triggerrate der Steuerelektronik 200 zu gering, so muss die Auswerteelektronik 9 weitere Triggerimpulse I dazwischenschieben.

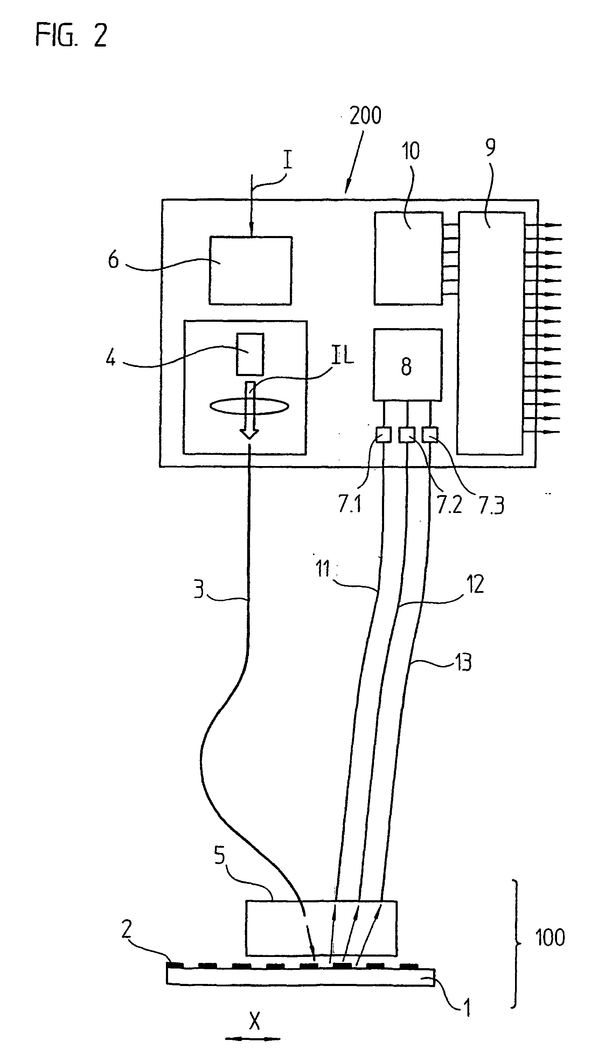

Das Ausführungsbeispiel gemäß Figur 2 unterschiedet sich vom ersten durch die Verwendung von multimode-Lichtleitfasem 11, 12, 13 für die Lichtrückführung der am Maßstab 1 modulierten Abtastlichtbündel zur Auswerteelektronik 9. In diesem Fall sind die Photodioden 7.1, 7.2, 7.3 zum Empfang des von den Lichtleitfasern 11, 12, 13 zurückgesendeten Lichtes in der Auswerteelektronik 9 enthalten. Auf diese Weise wird die Abtasteinrichtung 5 passiv, d.h. sie ist nicht mehr mit elektrischen Kabeln verbunden und kann damit auch in kritischen Umgebungen (Hochspannung, Entladungen, explosive Gase) ohne Störungen eingesetzt werden. Außerdem kann man damit auch relativ hochfrequente Signale einfach übertragen.

Der Lichtimpuls IL der Lichtquelle 4 kann zur gleichzeitigen Beleuchtung von mehreren Maßstäben, beispielsweise an mehreren Achsen einer Maschine, dienen. Dabei sollten die lichtleitfasern, in denen der gemeinsame Lichtimpuls IL den einzelnen Maßstäben zugeführt wird zumindest annähernd gleiche Längen aufweisen.

Der Triggerimpuls I ist ein elektrischer oder optischer Impuls, mit dem vorteilhafterweise Sensoren und ggf. Aktoren einer Maschine gemeinsam synchronisiert sind. Als Sensoren sind Positionsmesseinrichtungen 100 mehrerer Achsen, Abstandssensoren, Beschleunigungs- und Geschwindigkeitssensoren zu nennen, also Sensoren, die zum Regeln herangezogen werden. Der Triggerimpuls I ist mit dem Reglertakt der Reglereinheit der Maschine, beispielsweise einer numerisch gesteuerten Werkzeugmaschine synchronisiert.

Ist der Triggerimpuls I bereits ein optischer Impuls, dann sind die in den Figuren 1 und 2 mit den Bezugszeichen 4 und 6 bezeichneten Elemente überflüssig, an deren Stelle kann eine optische Verarbeitungseinheit in Form eines optischen Faserverstärkers, optischen Schalters oder optischen Mischers vorgesehen sein.

Die hochgenaue Positionsmessung gemäß der Erfindung kann mit einer zweiten Positionsmessung kombiniert werden. Beispielsweise wird über die Lichtleitfaser 3 Gleichlicht einer vom Lichtimpuls IL abweichenden Wellenlänge übertragen und mit diesem Gleichlicht die Teilung 2 und/oder eine andere Teilung bzw. Codierung beleuchtet und abgetastet. Mit der Abtastung durch das Gleichlicht wird dann eine grobe Position bestimmt und mit dem Lichtimpuls IL diese Position verfeinert. Dabei kann die grobe Position durch einen Hardware-Zähler ermittelt werden und die Positionsbestimmung mittels des Lichtimpulses IL erfolgt durch einen Sofware-Zähler, der die Momentanposition aufgrund von Interpolationswerten der gegeneinander phasenverschobenen Abtastsignale liefert.

## Patentansprüche

1. Verfahren zur Positionsbestimmung eines bewegten Objektes einer Maschine, dessen Bewegung mittels einer Reglereinheit gesteuert wird, mit folgenden Verfahrensschritten:
- Übertragen eines Lichtimpulses (IL) über eine Lichtleifaser (3) zu einem Maßstab (1) und Beleuchten des Maßstabes (1) mit dem Lichtimpuls (IL);
- positionsabhängige Beeinflussung des Lichtimputses (IL) durch den Maßstab (1);
- Erfassen des vom Maßstab (1) beeinflussten Lichtimpulses (IL) von zumindest einem Photodetektor (7.1, 7.2, 7.3), **gekennzeichnet durch**
- Erzeugen des Lichtimpulses (IL) aufgrund eines Anforderungssignals (I), wobei
- das Anforderungssignal (I) von der Reglereinheit der Maschine synchronisiert zum Regtertakt erzeugt wird.

2. Verfahren nach Anspruch 1, **dadurch gekennzeichnet, dass** aufgrund des Lichtimpulses (IL) im Photodetektor (7.1, 7.2, 7.3) Photoladungen erzeugt werden, die auf nachfolgende Ladungsverstärker (8.1, 8.2, 8.3) übertragen werden.

3. Verfahren nach Anspruch 2, **dadurch gekennzeichnet, dass** der Ladungsverstärker (8.1, 8.2, 8.3) zwischen dem Auftreten von zwei Lichtimpulsen (IL) zurückgesetzt wird.

4. Verfahren nach einem der vorhergehenden Ansprüche, **dadurch gekennzeichnet, dass** mehrere Photodetektoren (7.1, 7.2, 7.3) vorgesehen sind, von denen jeder ein Teilstrahlenbitndet des vom Maßstab (1) beeinflussten Lichtimpulses (IL) empfängt.

5. Verfahren nach einem der vorhergehenden Ansprüche, **dadurch gekennzeichnet, dass** der Lichtimpuls (IL) zu mehreren Maßstäben an mehreren Achsen der Maschine übertragen wird.

6. Positionsrnesseinrichtung zur Positionsbestimmung eines bewegten Objektes einer Maschine, dessen Bewegung mittels einer Reglereinheit gesteuert wird, mit
- einem Maßstab (1) und einer Abtasteinrichtung (5) zur Abtastung des Maßstabes (1);
- einer Lichtleitfaser (3) zur Übertragung eines Uchtimpulses (IL) von einer Lichtquelle (4) zur Abtasteinrichtung (5) und zur Beleuchtung des Maßstabes (1 );
- zumindest einem Photodetektor (7.1, 7.2. 7.3) zum Erfassen des vom Maßstab (1) positionsabhängig beeinflussten lichtimpulses (IL), **gekennzeichnet dadurch, dass**
- die Lichtquelle (4) aufgrund eines von der Reglereinheit der Maschine synchron zum Regtertakt erzeugten Anforderungssignals (I) den Lichtimpuls (IL) abgibt.

7. Positionsmesseinrichtung, nach Anspruch 6, **dadurch gekennzeichnet, dass** dem zumindest einen Photodetektor (7.1, 7.2, 7.3) ein Ladungsverstärker (8.1, 8.2.8.3) nachgeordnet ist.

8. Positionsmesseinrichtung nach Anspruch 7, **dadurch gekennzeichnet, dass** der zumindest eine Photodetektor (7.1, 7.2, 7.3) mit dem Ladungsverstärker (8.1, 8.2, 8.3) in der Abtasteinrichtung (5) angeordnet ist.

9. Positionsmesseinrichtung nach Anspruch 6 oder Anspruch 7 **dadurch gekennzeichnet, dass** der zumindest eine Photodetektor (7.1, 7.2, 7.3) in einer Auswerteeinrichtung (200) angeordnet ist, und dass der vom Maßstab (1) positionsabhängig beeinflusste Lichtimpuls (IL) über eine Lichtleitfaser (11, 12, 13) zu dem Photodetektor (7.1,- 7.2, 7.3) geleitet wird.

10. Positionsmesseinrichtung nach einem der Ansprüche 6 bis 9, **dadurch gekennzeichnet, dass** die Lichtleitfaser (3) eine singlemode-Faser ist.

11. Positionsmesseinrichtung nach einem der Ansprüche 6 bis 9, **dadurch gekennzeichnet, dass** die Lichtleitfaser (3) eine multimode- Gradientenindex-Faser ist.

12. Positionsmesseinrichtung nach einem der Ansprüche 6 bis 11, **dadurch gekennzeichnet, dass** die Lichtquelle (4) ein Halbleiterlaser ist.

13. Positionsmesseinrichtung nach einem der Ansprüche 6 bis 12, **dadurch gekennzeichnet, dass** mehrere Photodetektoren (7.1, 7.2, 7.3) vorgesehen sind, von denen jeder ein Teilstrahlenbündei des vom Maßstab (1) beeinflussten Lichtimpulses (IL) empfängt.

## Claims

1. Method for determining the position of a moved object of a machine, the movement of which object being controlled by means of a control unit, having the following method steps:
• transmission of a light pulse (IL) via an optical fibre (3) to a scale (1) and illumination of the scale (1) with the light pulse (IL);
• influencing the light pulse (IL) by the scale (1) in a position-dependent manner;
• detection of the light pulse (IL) influenced by the scale (1) by at least one photodetector (7.1, 7.2, 7.3),
**characterised by**
• generation of the light pulse (IL) on the basis of a request signal (I), wherein
• the request signal (I) is generated by the control unit of the machine synchronously with the control unit cycle.

2. Method according to Claim 1, **characterised in that** photo-charges, which are transmitted to charge amplifiers (8.1, 8.2, 8.3) connected downline, are generated in the photodetector (7.1, 7.2, 7.3) as a result of the light pulse (IL).

3. Method according to Claim 2, **characterised in that** the charge amplifier (8.1, 8.2, 8.3) is reset between the occurrence of two light pulses (IL).

4. Method according to one of the preceding claims, **characterised in that** several photodetectors (7.1, 7.2, 7.3) are provided, each of which receives a component beam of the light pulse (IL) influenced by the scale (1).

5. Method according to one of the preceding claims, **characterised in that** the light pulse (IL) is transmitted to several scales on several axes of the machine.

6. Position measuring system for determining the position of a moved object of a machine, the movement of which object being controlled by means of a control unit, having
• a scale (1) and a scanning device (5) for scanning the scale (1);
• an optical fibre (3) for transmitting a light pulse (IL) from a light source (4) to the scanning device (5) and for illuminating the scale (1);
• at least one photodetector (7.1, 7.2, 7.3) for detecting the light pulse (IL) influenced by the scale (1) in a position-dependent manner,
**characterised in that**
• the light source (4) emits the light pulse (IL) on the basis of a request signal (I) generated by the control unit of the machine synchronously with the control unit cycle.

7. Position measuring system according to Claim 6, **characterised in that** a charge amplifier (8.1, 8.2, 8.3) is connected downline of the at least one photodetector (7.1, 7.2, 7.3).

8. Position measuring system according to Claim 7, **characterised in that** the at least one photodetector (7.1, 7.2, 7.3) is arranged with the charge amplifier (8.1, 8.2, 8.3) in the scanning device (5).

9. Position measuring system according to Claim 6 or Claim 7, **characterised in that** the at least one photodetector (7.1, 7.2, 7.3) is arranged in an evaluation device (200), and that the light pulse (IL) influenced by the scale (I) in a position-dependent manner is conducted via an optical fibre (11, 12, 13) to the photodetector (7.1, 7.2, 7.3).

10. Position measuring device according to one of Claims 6 to 9, **characterised in that** the optical fibre (3) is a single-mode fibre.

11. Position measuring device according to one of Claims 6 to 9, **characterised in that** the optical fibre (3) is a multi-mode fibre.

12. Position measuring device according to one of Claims 6 to 11, **characterised in that** the light source (4) is a semiconductor laser.

13. Position measuring device according to one of Claims 6 to 12, **characterised in that** several photodetectors (7.1, 7.2, 7.3) are provided, each of which receives a component beam of the light pulse (IL) influenced by the scale (1).

## Revendications

1. Procédé pour déterminer la position d'un objet déplacé d'une machine, dont le déplacement est commandé par une unité de réglage, comprenant les étapes de procédé suivantes qui consistent à
• acheminer une impulsion lumineuse (IL) jusqu'à une règle de mesure par l'intermédiaire d'une fibre optique (3) et à illuminer la règle de mesure (1) à l'aide de l'impulsion lumineuse (IL),
• modifier l'impulsion lumineuse (IL) en fonction de la position par le biais de la règle de mesure (1),
• palper l'impulsion lumineuse (IL) modifiée par la règle de mesure (1) au moyen d'au moins un photodétecteur (7.1, 7.2, 7.3),
**caractérisé par**
• la production de l'impulsion lumiineuse (II) en réponse à un signal d'appel (I),
• le signal d'appel (I) étant produit par l'unité de réglage de la machine de manière synchronisée avec la cadence du système de réglage.

2. Procédé selon la revendication 1, **caractérisé par le fait que** sur la base de l'impulsion lumineuse (IL), des charges photoélectriques sont produites dans le photodétecteur (7.1, 7.2, 7.3) qui sont transmises à des amplificateurs de charge (8.1, 8.2, 8.3) placés en aval.

3. Procédé selon la revendication 2, **caractérisé par le fait que** l'amplificateur de charge (8.1, 8.2, 8.3) est réinitialisé entre l'apparition de deux impulsions lumineuses (IL).

4. Procédé selon une des revendications précédentes, **caractérisé par le fait qu'**il est prévu plusieurs photodétecteurs (7.1, 7.2, 7.3) qui reçoivent chacun un faisceau partiel de rayons de l'impulsion lumineuse (IL) modifiée par la règle de mesure (1).

5. Procédé selon une des revendications précédentes, **caractérisé par le fait que** l'impulsion lumineuse (IL) est transmise à plusieurs règles de mesure suivant plusieurs axes de la machine.

6. Dispositif de mesure de position pour déterminer la position d'un objet déplacé d'une machine, dont le déplacement est commandé par une unité de réglage, comportant
• une règle de mesure (1) et un dispositif de palpage (5) pour palper la règle de mesure (1),
• une fibre optique (3) pour acheminer une impulsion lumineuse (IL) d'une source lumineuse (4) au dispositif de palpage (5) aux fins d'illuminer la règle de mesure (1) ;
• au moins un photodétecteur (7.1, 7.2, 7.3) pour détecter l'impulsion lumineuse (IL) modifiée par la règle de mesure (1) en fonction de la position
**caractérisé par le fait que**
• la source lumineuse (4) délivre l'impulsion lumineuse (IL) en réponse à un signal d'appel (I) produit par l'unité de réglage de la machine de manière synchronisée avec la cadence du système de réglage.

7. Dispositif de mesure de position selon la revendication 6, **caractérisé par le fait qu'**un amplificateur de charge (8.1, 8.2, 8.3) est placé derrière le photodétecteur (7.1, 7.2, 7.3) au nombre d'au moins un.

8. Dispositif de mesure de position selon la revendication 7, **caractérisé par le fait que** le photodétecteur (7.1, 7.2, 7.3) au nombre d'au moins un et l'amplificateur de charge (8.1, 8.2, 8.3) sont disposés dans l'unité de palpage (5).

9. Dispositif de mesure de position selon la revendication 6 ou la revendication 7, **caractérisé par le fait que** le photodétecteur (7.1, 7.2, 7.3) au nombre d'au moins un est disposé dans un dispositif de traitement (200) et que l'impulsion lumineuse (IL) modifiée par la règle de mesure (1) en fonction de la position est amenée au photodétecteur (7.1, 7.2, 7.3) par l'intermédiaire d'une fibre optique (11, 12, 123).

10. Dispositif de mesure de position selon une des revendications 6 à 9, **caractérisé par le fait que** la fibre optique (3) est une fibre monomode.

11. Dispositif de mesure de position selon une des revendications 6 à 9, **caractérisé par le fait que** la fibre optique (3) est une fibre multimode à gradient d'indice.

12. Dispositif de mesure de position selon une des revendications 6 à 11, **caractérisé par le fait que** la source lumineuse (4) est un laser à semiconducteur.

13. Dispositif de mesure de position selon une des revendications 6 à 12, **caractérisé par le fait qu'**il est prévu plusieurs photodétecteurs (7.1, 7.2, 7.3) qui reçoivent chacun un faisceau partiel de rayons de l'impulsion lumineuse (IL) modifiée par la règle de mesure (1).
